**Europäisches Patentamt**

**European Patent Office**

**Office européen des brevets**

(19)

(11) Veröffentlichungsnummer: **0 125 465**

**A2**

(12)

# EUROPÄISCHE PATENTANMELDUNG

(21) Anmeldenummer: **84103782.3**

(22) Anmeldetag: **05.04.84**

(51) Int. Cl.³: **B 01 F 7/20**

(30) Priorität: **15.04.83 DE 3313710**

(43) Veröffentlichungstag der Anmeldung:
**21.11.84 Patentblatt 84/47**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Walzel, Peter, Dr.**
**Goethestrasse 63**
**D-4047 Dormagen(DE)**

(72) Erfinder: **Muschelknautz, Edgar, Prof. Dr.**
**Carl-Rumpff-Strasse 33**
**D-5090 Leverkusen(DE)**

(54) **Rührvorrichtung.**

(57) Bei der Rührvorrichtung sind die Enden der Rotorstacheln (5a) und der Statorstacheln (5b) — werden die Stachelenden auf ihre Schwerpunktslinien in Stachelrichtung reduziert und als Gerade angenähert — windschief zur Rotationsachse (2). Dadurch wird bei einer kurzen Bauweise die Mischwirkung verbessert, gegebenenfalls kann auch eine Förderwirkung erzeugt werden.

FIG. 7

EP 0 125 465 A2

BAYER AKTIENGESELLSCHAFT        5090 Leverkusen, Bayerwerk

Konzernverwaltung RP
Patentabteilung

Rührvorrichtung
―――――――――――――

Die Erfindung betrifft eine Rührvorrichtung, enthaltend
in einem Gehäuse einen Rotor mit Stacheln und einen mit dem
Rotor zusammenarbeitenden Stator mit Stacheln, sowie die
Anwendung dieser Rührvorrichtung auf spezielle Mischprobleme.

Kontinuierliche Ströme viskoser Flüssigkeiten werden üblicherweise in statischen Mischern vermischt. Diese Mischer enthalten keine drehenden Teile und erreichen
hohe Mischgüten. Dabei muß man aber einen relativ hohen
Druckverlust und ein großes Mischervolumen in Kauf nehmen. Außerdem ist eine nachträgliche Korrektur der Mischgüte während des Betriebes unmöglich. Beim Vermischen von
hoch- und niederviskosen Flüssigkeiten werden besonders
lange Mischer benötigt. Diese Nachteile können durch den
Einsatz von Rührern oder dynamischen Mischern vermieden
werden. Bei vielen chemischen Reaktionen ist die rasche
Vermischung der Ausgangsstoffe sehr oft eine notwendige
Voraussetzung zum Erzielen der geforderten Qualität des
Endproduktes.

Bei Rührern setzt sich im allgemeinen Fall die dem Produkt aufgezwungene Strömung aus einer Rotations-, einer

Le A 22 226 - Ausland

Axial- und einer Radialkomponente zusammen. Es wird zwischen schnellaufenden und langsamlaufenden Rührern unterschieden. Bekannte Rührer (Lüger, Lexikon der Technik (1970), Bd. 16, 417 f.) sind der Schneidrührer, bei ihm befinden sich an der Welle in Strömungsrichtung schmale Bleche; der Impellerrührer mit drei der Drehrichtung entgegengesetzt gewölbten Blättern; der Balkenrührer bzw. der Kreuzbalkenrührer und der Fingerrührer. Alle diese Rührer haben Arme, Träger, Balken, Blätter usw., die an einer meist zum Behälter koaxialen Rotationsachse befestigt sind. Bei dem im folgenden beschriebenen Rührer wird in der Größe dieser Elemente nicht das Erfindungswesentliche gesehen, und es wird für die an der Rotationsachse befestigten Elemente verallgemeinernd der Ausdruck Stachel gebraucht. Ähnlich verallgemeinernd wird die Mischvorrichtung als Stachelrührer bezeichnet. Gegebenenfalls wird auch für die Strombrecherelemente am Gehäuse ebenfalls der Ausdruck Stachel verwendet. Zur Beschreibung der Ausbildung eines Stachels kann man die Schwerpunktlinie in Stachelrichtung heranziehen und Teilbereiche dieser Linie durch Gerade annähern.

Bei allen bekannten Rührern bzw. Mischern verläuft der Stachel (ausgedrückt durch die oben definierte Schwerpunktslinie) zunächst radial auf die Rotationsachse bezogen, in den allermeisten Fällen sogar in einer Ebene senkrecht zur Rotationsachse. Bei langsamlaufenden Rührern ist dieser Verlauf gelegentlich auch an die gewölbte Form des Behälterbodens angepaßt. Beim Schneidrührer ist beispielsweise bekannt, daß die geraden, radial verlaufenden Stacheln nicht in der Ebene senkrecht zur Rotationsebene liegen. Bei einem

Le A 22 226

Fingerrührer hat man zusammengesetzte "Stacheln". Der an der Rotationsachse befestigte Trägerteil verläuft wie beim Anker- oder Balkenrührer radial, näherungsweise in einer Ebene senkrecht zur Rotationsachse. An diesen Trägerteilen sind meist mehrere nach oben zeigende Finger befestigt. Die Finger - charakterisiert wiederum durch ihre Schwerpunktlinie in Fingerrichtung, praktisch stets eine Gerade - verlaufen dabei parallel zur Rotationsachse, d.h. Finger und Rotationsachse liegen in einer Ebene, sie sind nicht windschief zueinander.

Es ist auch bekannt, durch den Einbau meist an der Be-hälterwand angebrachter Strombrecher die Rotationsströ-mung zugunsten einer verstärkten Radialströmung abzubremsen. Jedoch ist die Mischwirkung bekannter Vorrichtungen, bezogen auf die Länge oder die aufzuwendende Energie, nicht immer ausreichend.

In der DE-OS 29 31 782 sind ein Mischverfahren und eine Vorrichtung beschrieben, bei der die zu mischenden Komponenten auf eine in einem zylindrischen Gehäuse rotierende Scheibe aufgegeben und durch Zentrifugalwirkung nach außen bewegt werden. Zur Verstärkung der Förder- und Mischwirkung sind auf der Scheibe schräggestellte Schaufeln angebracht. Die Mischung erfolgt im wesentlichen beim Durchtritt zwischen dem Gehäuse und den Zähnen am Umfang der Mischscheibe. Ein Nachteil besteht darin, daß in den Ecken zwischen Schaufeln und Scheibe bei laminarer Strömung Zonen geringer Strömungsgeschwindigkeit entstehen. Außerdem tritt infolge Reibung zwischen Scheibe und Gehäuse eine beträchtliche Verlustleistung auf. Für Anwendungsfälle in der Faser-und Fototechnik ist die Mischgüte ungenügend.

Le A 22 226

0125465

In der DE-OS 29 09 422 ist eine scheibenförmige Mischvorrichtung beschrieben, bei der die aufeinanderfolgenden Stator- und Rotorscheiben in Umfangsrichtung konzentrische Nuten aufweisen. Dabei passen die so gebildeten
Ringe des Stators in die Nuten des Rotors und umgekehrt.
Die Ringe haben Einfräsungen, die schräg zur Umfangsrichtung verlaufen. Dadurch kann gleichzeitig eine gute Förder-
der- und Mischwirkung erzielt werden. Nachteilig ist,
daß zwischen den zylindrischen Flächen der Nuten und
Ringe eine erhöhte Reibleistung entsteht und die beim
Mischen entstehende Wärme schlecht von den inneren
Mischscheiben abtransportiert werden kann.Die Energiedissipation ist örtlich gut, jedoch nicht homogen über
den ganzen Mischraum gleich. Die Mischwirkung ist also
stellenweise besser und stellenweise schlechter.

Aufgabe der Erfindung ist es, bei einer Rührvorrichtung
die Mischwirkung mit einfachen Mitteln gegenüber dem Stand
der Technik beträchtlich zu erhöhen; besonders im Hinblick
auf Aufgaben wie sie vorzugsweise in der Fasertechnik oder
z.B. bei der Herstellung von Fotoemulsionen benötigt wird.

Die Aufgabe wird von der Rührvorrichtung dadurch gelöst, daß die Rotorstacheln oder Statorstacheln oder beide
so ausgebildet sind, daß - werden die Stachelenden auf
ihre Schwerpunktlinien in Stachelrichtung reduziert und
als Geraden angenähert - die freien Enden der Stacheln
windschief zur Rotationsachse verlaufen. Spezielle Ausführungsformen sind in den Unteransprüchen beschrieben.

Le A 22 226

Durch die intensivere Mischwirkung kann die Baulänge verkürzt werden. Der Rührer ist besonders geeignet im laminaren Strömungsbereich, insbesondere auch bei hochviskosen Stoffen. Der Rührer ist besonders geeignet zum Mischen zweier Flüssigkeiten, deren Viskosität sich erheblich unterscheidet. Er eignet sich auch, wenn zwei Komponenten vermischt werden müssen, deren Mengenverhältnisse extrem sind, und zur Herstellung von Dispersionen und Emulsionen. Er eignet sich sowohl zum Kontials auch zum Batch-Betrieb.

Eine besonders gute Radialvermischung wird dann erreicht, wenn Rotor- und Statorstacheln in Ebenen normal auf die Achse angeordnet sind. Je nach Neigungsrichtung der Rotor und Statorstacheln zum Radiusreaktor kann außerdem eine radiale Förderwirkung erzielt werden, die zur Achse oder von der Achse weggerichtet ist. Trotz der bekannten Schwierigkeiten, daß im Inneren des Mischers auf kleinen Radien das Schergefälle gering ist, schafft die Mischvorrichtung für alle Flüssigkeitsteilchen gleich Bedingungen. Durch den Tranport von außen nach innen und umgekehrt gelangen Flüssigkeitsteilchen aus den an sich weniger wirksamen inneren Bereich in den äußeren Bereich. Es gibt deshalb keine Wandschicht. Im Vergleich zum statischen Mischer entsteht über die Drehzahl ein weiterer Freiheitsgrad durch den die Mischwirkung beeinflußt werden kann. Im gleichen Volumen kann ein vielfaches der Mischwirkung im Vergleich zu statischen Mischern erzielt werden.

Wegen der guten radialen Vermischung kann in einem Behälter, in dem ein solcher Rührer eingebaut ist, über den Querschnitt des Behälters eine recht gleichmäßige

Le A 22 226

Temperatur aufrechterhalten werden. Durch Einbau des erfindungsgemäßen Rührers in einen Reaktor für endo- oder exotherme Reaktionen wird eine enge Tempeaturtoleranz im Reaktionsmedium erleichtert.

Bei Mischaufgaben, bei denen neben der Mischwirkung auch eine axiale Förderwirkung erzielt werden soll, kann man einen Rührer einsetzen, bei dem die Stacheln aus Ebenen senkrecht zur Rotationsachse herausragen. Bei kreuzweiser (in Richtung senkrecht zur Rotationsachse gesehen) Anordnung von Rotor- und Statorstacheln kann eine Förderwirkung erzielt werden. Durch eine Kombination unterschiedlich geneigter Stacheln kann in einem Mischreaktor örtlich also jede Misch- und Förderwirkung erzeugt werden.

Bei statischen Mischern wurde beobachtet (Chemie-Ingenieur- Technik 51 (1979) 5, 347-364), daß Stege mit rechteckigem Querschnitt eine gute Mischwirkung ermöglichen. Auch bei den Stacheln hat sich diese rechteckige Querschnittsform als besonders günstig herausgestellt. Sie bietet auch hinsichtlich der Herstellung Vorteile.

Die Erfindung ist beispielhaft in den Zeichnungen dargestellt und im folgenden näher erläutert. Es zeigen:

Fig. 1    Dynamischer Durchflußmischer im Längsschnitt;
Fig. 2    dynamischer Durchflußmischer nach Fig. 1
          (Schnitt A/B) im Querschnitt;
Fig. 3    Meßergebnisse der Standardabweichungen am Aus-
          tritt unterschiedlich erfindungsgemäß ausgebil-
          deter Mischvorrichtungen;

Le A 22 226

Fig. 4    eine andere Ausführungsform eines Rührers im
          Querschnitt;

Fig. 5    ein Ring des Rotors nach Fig. 4, räumlich dargestellt;

Fig. 6    ein Ring des Gehäuses nach Fig. 4, räumlich
          dargestellt;

Fig. 7    Mischvorrichtung mit Rotor und Stator, bei dem
          sich die Stacheln senkrecht zur Rotationsachse
          gesehen kreuzen.


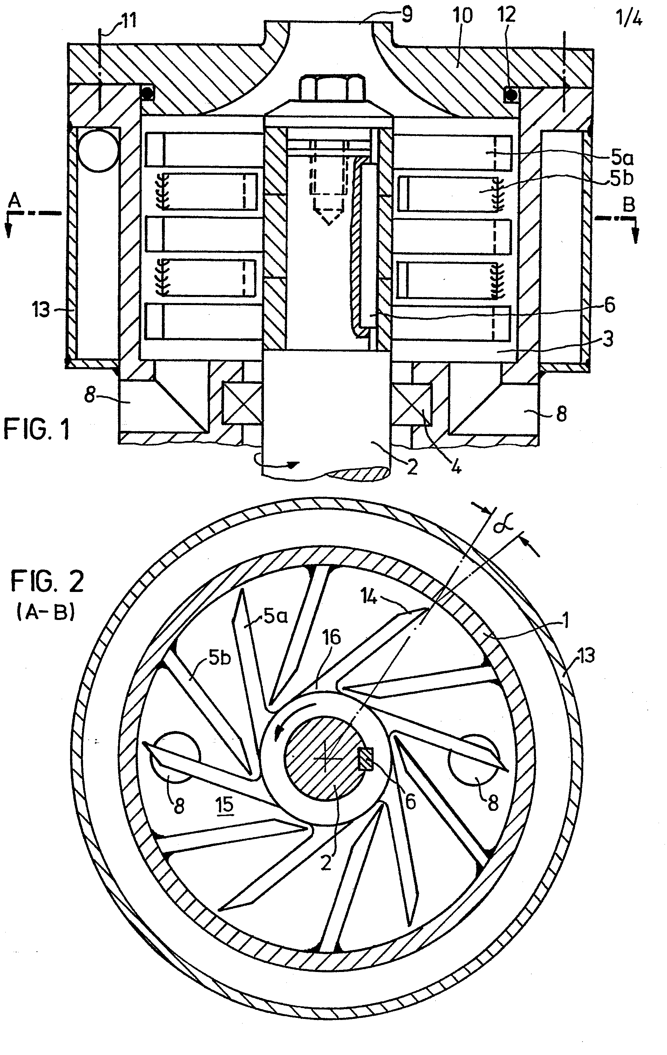

In Fig. 1 verläuft in dem zylindrischen Gehäuse 1 die
Rotationsachse 2 koaxial. Der Mischraum 3 wird durch
die Gleitringdichtung 4 nach außen hin abgedichtet. Die
Stacheln 5 sind in Ebenen normal zur Achse angeordnet.
Die am Rotor befestigten Stacheln sind mit 5a, die den
Stator bildenden Stacheln sind mit 5b bezeichnet. Es
folgen Ebenen der an der Rotorachse befestigten Stacheln
und Ebenen von Stacheln, die am feststehenden Gehäuse 1
angebracht sind, aufeinander. Die am Gehäuse angebrachten
Stacheln bilden mit dem Gehäuse 1 den Stator der Mischvorrichtung. Durch die Paßfeder 6 sind die Stacheln auf
der Welle gegen Verdrehen gesichert. Auf der einen Seite
der Mischvorrichtung befinden sich die Eintrittsöffnungen 8
für die zu mischenden Flüssigkeiten. Der Austrittsstutzen 9
befindet sich am oberen Ende des Mischers im Deckelflansch
10, der mit den Schrauben 11 befestigt ist. Die Abdichtung
erfolgt durch eine O-Ring-Dichtung 12. Am Gehäuse 1 befindet sich außen der Kühlmantel 13, über den die Mischwärme abgeführt werden kann. Selbstverständlich können
auf diese Weise auch die zu mischenden Flüssigkeiten
aufgeheizt werden.


Fig. 2 zeigt einen Querschnitt durch die in Fig. 1 ge-


Le A 22 226

zeichnete Mischvorrichtung. Rotor- und Statorstacheln 5 sind schräg zur Umfangrichtung gestellt. Es sind außerdem bei einem Stachel strichliert die Schwerpunktlinie und ein Radiusvektor eingezeichnet; gemäß der Erfindung soll der Winkel $\alpha$ zwischen diesen beiden Linien mindestens 15° betragen. Die Stacheln des Rotors sind tangential an Ringen angebracht, die die Drehbewegung von der Welle 2 auf die Stacheln übertragen. Durch die tangentiale Anordnung der Stacheln weisen diese auf kleinen Radien praktisch in Umfangsrichtung. Zur Vermeidung eines hohen Drehmoments sind die Stacheln an ihren Enden durch eine Fase 14 abgeschrägt. Am Stachelansatz werden durch Hohlkehlen 15 langsam durchströmte Gebiete, sogenannte Totzonen, vermieden. Die Enden der Rotorstacheln sollen möglichst nahe an den zylindrischen Mantel heranreichen, gleiches gilt für die Statorstacheln, die möglichst nahe an die Welle 2 heranreichen sollen. Bei dieser Ausbildung der Stacheln kann der Rotor aus dem Stator herausgezogen werden. Es ist für die Mischwirkung ohne Bedeutung, ob die Welle im oder entgegen des Uhrzeigersinns gedreht wird.

Die Mischgüte, die in Durchflußmischern erreicht wird, hängt bei vorgegebener Geometrie der Mischvorrichtung von deren Volumen V, der Drehzahl n und dem Durchsatz $\dot{V}$ ab. Diese Parameter werden üblicherweise zu der Kennzahl $nV/\dot{V}$ zusammengefaßt. Die erreichte Endmischgüte kann durch die Standardabweichung $\sigma$ von Probenmessungen bestimmt werden. Die Ausgangsstandardabweichung $\sigma_0$ hängt nur vom

Le A 22 226

Durchsatzverhältnis der eingespeisten Komponenten $\dot{V}_1$ und $\dot{V}_2$ nach der Beziehung $\tilde{\sigma}_0 = \sqrt{\dot{V}_1 \dot{V}_2} / (\dot{V}_1 + \dot{V}_2)$ ab. Die nach dem Mischvorgang erreichte Standardabweichung wird vorzugsweise auf die Ausgangsstandardabweichung $\sigma_0$ bezogen. Dadurch wird die erzielte Standardabweichung $\sigma / \sigma_0$ unabhängig vom Volumenstromverhältnis.

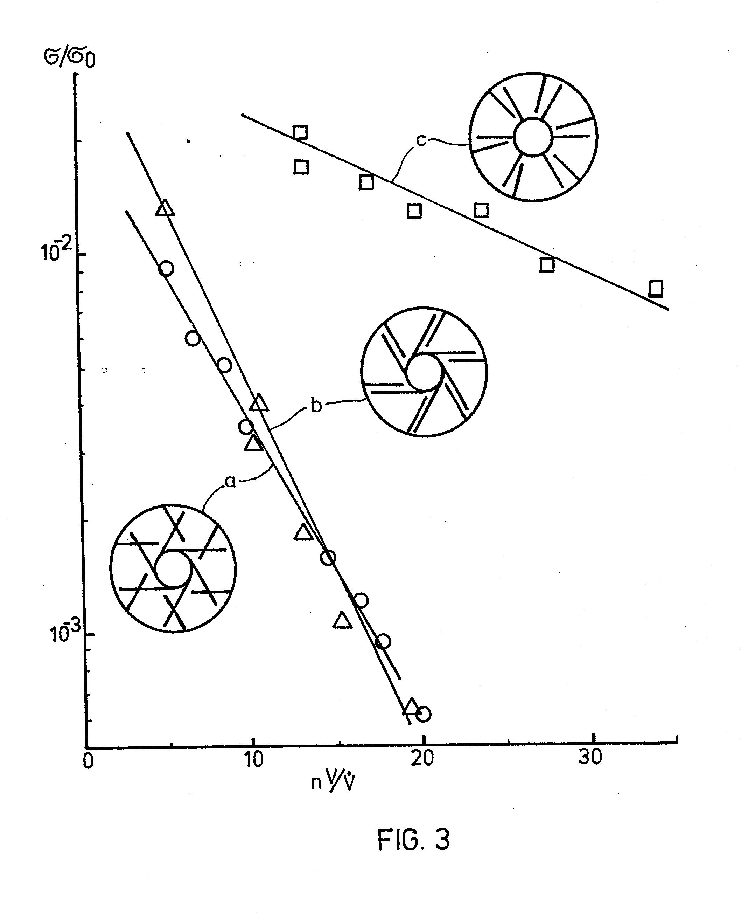

Es wurden mit einem Mischer nach Fig. 1 Versuche mit Glucosesirup durchgeführt. Zur Mischgütebestimmung wurde einer der Volumenströme mit Farbstoff eingefärbt. Am Austritt des Mischers wurde die Farbstoffkonzentration in einem $1mm^3$-Probenkörper an verschiedenen Stellen des Austritts jeweils während einer Rotorumdrehung durch Extinktion eines Laserstrahls gemessen. Aus diesen Werten kann der Quotient $\sigma / \sigma_0$ bestimmt werden. Es wurden zwei erfindungsgemäße Rührer (a und b) mit einem Rührer mit geraden, radialen Stacheln (c) verglichen. Bei dem Rührer a) waren Rotor- und Statorstachel gerade, sie haben sich in Richtung der Rotationsachse gesehen gekreuzt. Durch Wenden der am Rotor aufgesetzten Ringe wurde ein Rührer b) erzeugt. Die Mischwirkung ist unabhängig von der Drehrichtung des Rührers. Die Standardabweichung ist für den untersuchten Bereich näherungsweise identisch. Demgegenüber ist bei einem Rührer, dessen Rotor- und Statorstacheln senkrecht zur Rotationsachse verlaufen, die Standardabweichung erheblich größer (Fig. 3).

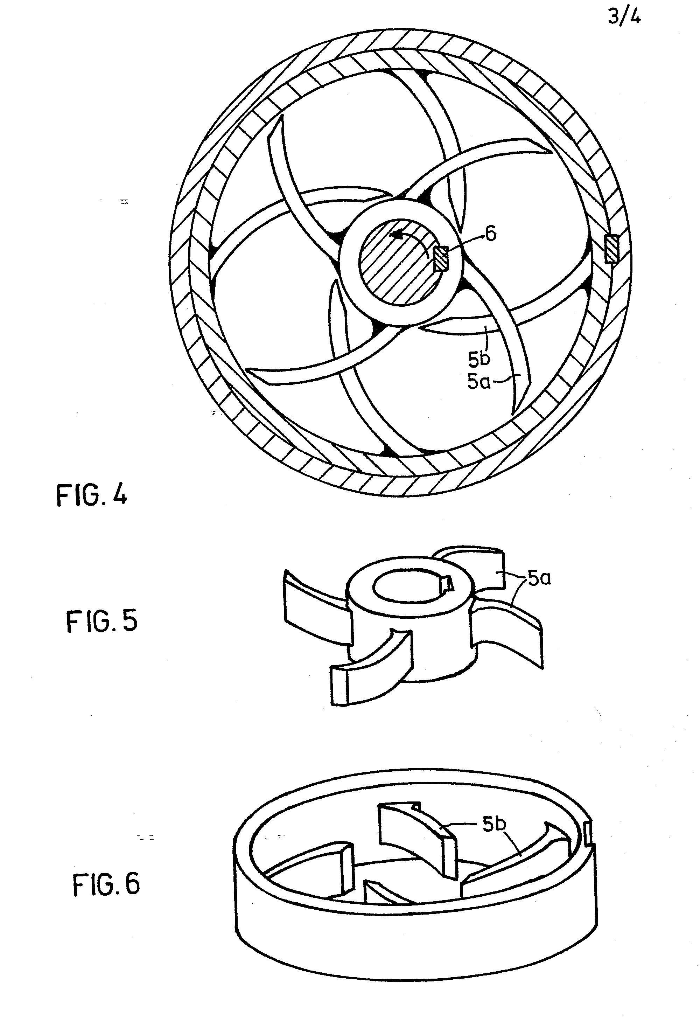

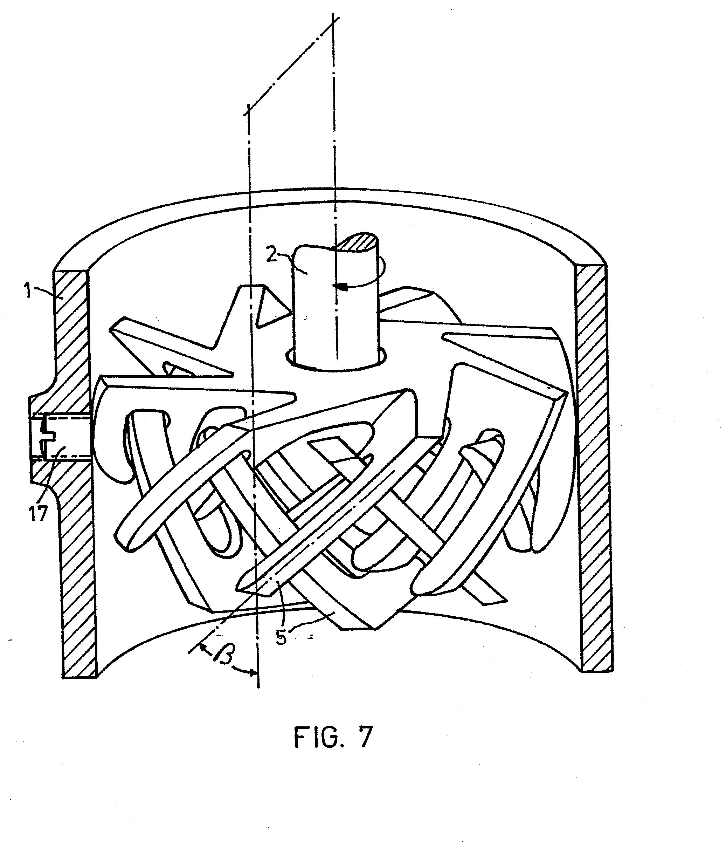

Fig. 4 zeigt einen ähnlichen Mischer wie Fig. 1, jedoch mit kreuzförmig angeordneten und näherungsweise gleichmäßig gekrümmten Stacheln. Zur Montage dieses Mischers,

Le A 22 226

ist es zweckmäßig, wenn Rotor und Stator, d.h. auch das Gehäuse, aus Ringen zusammengesetzt sind; an jedem Ring ist ein Satz Stacheln befestigt. Fig. 5 zeigt einen Ring des Rotors, Fig. 6 einen Statorring. Bei einem in Längsrichtung teilbarem Statorgehäuse kann natürlich auf die ringförmige Ausbildung verzichtet werden.

In Fig. 7 ist ein Mischer abgebildet, bei dem sowohl die Rotor- als auch die Statorstachelenden - werden die Stachelenden auf ihren Schwerpunktlinien in Stachelrichtung reduziert und als Geraden angenähert - mit ihren Spuren in der zur Rotationsachse und den Endpunkten der Stacheln enthaltenden Ebenen einen Winkel von mindestens 15° bilden. Er ist in dieser Figur mit dem Winkel ß bezeichnet. Die Stacheln 5 des Rotors greifen in die Ringräume zwischen den Stachelreihen des Stators und umgekehrt. Der Stator wird in dem zylindrischen Gehäuse 1 durch die Madenschraube 17 festgehalten. Bei der hier eingezeichneten kreuzweisen Stachelanordnung und einer Drehrichtung des Rotors wie eingezeichnet, bewirken die Stacheln einen Transport der Flüssigkeit nach unten. Durch Umkehrung des Drehsinns wird in gleicher Weise die Flüssigkeit nach oben gefördert. Der Antrieb des Rotors erfolgt über die Welle 2, die durch den Stator durchgeführt ist. Hier wird durch die windschiefen Stachelenden insbesondere die axiale Mischung der Flüssigkeit verstärkt. Bei einem in Längsrichtung durchströmten Gehäuse ist es oft zweckmäßig, Mischelemente nach Fig. 7 mit Mischelementen nach Fig. 2 in Achsrichtung hintereinander zuschalten. Dadurch kann in einer Mischvorrichtung gleichzeitig eine hohe Axial- und eine hohe Radialmischwirkung erzielt werden.

Le A 22 226

Wegen der guten Förderwirkung eignet sich diese Ausführungsform gemäß Fig. 7 auch besonders gut zum Einmischen von Pulvern in Flüssigkeiten. Durch die an den Stachelflanken entstehende Scherung können Pulveragglomerate dispergiert werden. Die Vorrichtung hat eine Ähnlichkeit mit der Charakteristik von Förderschnecken (J. Pawlowski, Die Ähnlichkeitstheorie in der physikalisch technischen Forschung, Springer, Berlin-Heidelberg, (1971)). Das Förderverhalten bei laminarer Strömung kann durch zwei Kennzahlen $A_1$ und $A_2$ beschrieben werden. Bei vollständiger Drosselung erreicht man den Förderdruck $\triangle P = A_2 \eta n^2 H/D$. Dabei bedeuten n Drehzahl, $\eta$ Viskosität der Flüssigkeit, D Außendurchmesser der Mischvorrichtung, H die Mischlänge. Bei dem Gegendruck $\triangle P_3 = 0$ wird die größte Fördermenge erzielt: $\dot{V} = A_1 n D^3$. Die Werte $A_1 = 0{,}32$ und $A_2 = 1100$ wurden für eine Mischvorrichtung mit den folgenden Abmessungen mit 10 Pas Glykosesirup als Versuchsflüssigkeit bestimmt: Außendurchmesser des Stators D = 94 mm, Spaltbreite zwischen Rotor- und Statorstacheln S = 1 mm, Winkel eines Stachelendes mit seiner Spur in der die Rotationsachse und den Endpunkt des Stachels enthaltenden Ebene ß = 45°, bei kreuzweiser Anordnung von Rotor- und Statorstacheln, Breite der Stacheln am Rotor und am Stator B = 6 mm, Dicke der Stacheln am Rotor und Stator $D_S$ = 4 mm, Anzahl der Stachelreihen am Stator $n_R$ = 2, Anzahl der Stachelreihen am Stator $n_S$ = 2, Höhe des Rotors $H_R$ = 30 mm, Höhe des Stators $H_S$ = 30 mm, je 8 Stacheln in jeder Stachelreihe am Rotor und Stator. Die vollständige Kennlinie der Mischvorrichtung lautet

$$\triangle P = \frac{A_2 \, \eta \, H \, n}{D} - \frac{A_2 \, \eta \, H \, V}{A_1 \, D^4}$$

Le A 22 226

Bei einer Flüssigkeit mit einer Viskosität von 50 Pas, einer Rührdrehzahl von n =2 $s^{-1}$ und einem Durchsatz von $\dot{V}$ = 200 l/h ergibt sich ein Druck von $\triangle$ P = 0,31 bar. Durch hintereinanderschalten mehrerer Rotor- und Statorkombinationen kann die Misch und Druckwirkung natürlich verstärkt werden. Bei Hintereinanderschaltung von z.B. 5 Rotor-Statorkombinationen mit gleicher Geometrie und gleicher Durchflußmenge entsteht ein Druck von $\triangle$ P = 1,6 bar.

Eine besondere Verwendung des erfindungsgemäßen Rührers ergibt sich bei einem Extruder. Ein Stachelrührer wie in Fig. 1 oder 2 wird am Ausgang des Extruders befestigt und der Rotor auf das vordere Ende der Extruderwelle aufgesetzt. Es ist dabei ohne weiteres möglich, die gesamte Welle des Extruders nach vorn herauszuziehen, weil ihr Durchmesser kleiner ist als der von den Statorstacheln beanspruchte Raum. Versuchsweise wurde diese Vorrichtung bei der Polyamidextrusion verwendet. Durch den Rührer wird eine Vergleichmäßigung der Temperatur im Kern und den Außenzonen erreicht. Mit der Vorrichtung gelingt es , dünnflüssige Additive in die hochviskose Perlonschmelze einzumischen.

Le A 22 226

## Anwendungsbeispiel

Zur Einmischung von Farbstammansätzen ($\eta$ = 0,1 - 0,5 Pas) in Polyacryllösung ($\eta$ = 20 - 30 Pas) wurde bisher ein statischer Mischer mit 100 mm Innendurchmesser und einer Länge von 3,1 m verwendet. Der Durchsatz der Spinnlösung ist 500 - 1200 l/h, die Stammansatzmenge beträgt 1 - 5 % der Lösungsmenge. Bei einigen Farbmischungen stellte sich die Mischgüte als ungenügend heraus. Deshalb wurde versuchsweise ein dynamischer Durchflußmischer nach Fig. 1 eingebaut. Der Mischer hat eine wirksame Mischlänge von 380 mm und einen Innendurchmesser von 180 mm. Bei einer Drehzahl von 50 min$^{-1}$ und einem Lösungsdurchsatz von 1000 l/h erreicht der Mischer praktisch die gleiche Mischgüte wie der Statikmischer. Durch Verstellen der Drehzahl, z.B. auf 150 min$^{-1}$ wird eine bedeutend höhere Mischgüte ermöglicht. Die im dynamischen Mischer auftretende hohe Scherwirkung begünstigt das Einmischen des niederviskosen Ansatzes ganz entscheidend und stellt eine ausreichende Homogenität sicher. Falls die zudosierte Farbmenge noch geringer wird und der Schwierigkeitsgrad der Mischaufgabe daher zunimmt, kann die Drehzahl noch weiter erhöht werden.

Le A 22 226

Patentansprüche

1) Rührvorrichtung, enthaltend in einem Gehäuse einen Rotor mit Stacheln (5) und einen mit dem Rotor zusammenarbeitenden Stator mit Stacheln, dadurch gekennzeichnet, daß die Rotorstacheln (5a) oder Statorstacheln (5b) oder beide so ausgebildet sind, daß - werden die Stachelenden auf ihre Schwerpunktlinien in Stachelrichtung reduziert und als Geraden angenähert - die freien Enden der Stacheln (5) windschief zur Rotationsachse (2) verlaufen.

2) Rührvorrichtung nach Anspruch 1, dadurch gekennzeichnet, daß die freien Enden der Rotorstacheln (5a) oder der Statorstacheln (5b) oder beide - werden die Stachelenden auf ihre Schwerpunktlinien in Stachelrichtung reduziert und als Gerade angenähert - in Ebenen senkrecht zur Rotationsachse (2) liegen und beim Schnitt des freien Endes des Stachels (5) mit einem Radiusvektor ein Winkel ($\alpha$) von mindestens 15° gebildet wird.

3) Rührvorrichtung nach Anspruch 1, dadurch gekennzeichnet, daß die freien Enden der Stacheln (5) - werden die Stachelenden auf ihre Schwerpunktlinien in Stachelrichtung reduziert und durch eine Gerade angenähert - mit ihren Spuren in die Rotationsachse (2) und den Endpunkten der Stachel enthaltenden Ebenen einen Winkel (ß) von mindestens 15° bilden.

Le A 22 226

0125465

4) Rührvorrichtungen nach einem der Ansprüche 1 bis 3, dadurch gekennzeichnet, daß die Rotor- oder Statorstacheln oder beide - werden die Stacheln (5) auf ihre Schwerpunktlinie in Stachelrichtung reduziert - eine Krümmung aufweisen.

5) Vorrichtung nach einem der Ansprüche 1 bis 4, dadurch gekennzeichnet, daß der Stachelquerschnitt rechteckig ist.

6) Vorrichtung nach einem der Ansprüche 1 bis 5, dadurch gekennzeichnet, daß sich Rotor- und Statorstacheln in Richtung der Rotationsachse gesehen kreuzen.

7) Vorrichtung nach Anspruch 1 oder 3, dadurch gekennzeichnet, daß sich Rotor- und Statorstachelenden - werden die Stachelenden auf ihre Schwerpunktlinien in Stachelrichtung reduziert und als Gerade angenähert - senkrecht zur Rotationsachse gesehen kreuzen.

8) Verwendung der Rührvorrichtung nach einem der Ansprüche 1 bis 7 als dynamischen Mischer in einem in Längsrichtung durchströmten Gehäuse, vorzugsweise bei laminaren Strömungsverhältnissen, vorzugsweise auch zum Vermischen von Flüssigkeiten, Emulsionen oder Dispersionen mit hohen Viskositätsunterschieden oder bei extrem ungleichen Mengenverhältnissen.

Le A 22 226

9) Verwendung der Rührervorrichtung nach einem der Ansprüche 1 bis 7 zur Vergleichmäßigung der Temperatur und Verbesserung des Wärmeaustausches.

10) Verwendung der Rührervorrichtung nach einem der Ansprüche 1 bis 7 als Förderorgan.

11) Verwendung der Rührervorrichtung nach einem der Ansprüche 1 bis 7 an einem Extruder, wobei der Rotor mit dem Kopf der Extruderwelle verbunden ist.

12) Verwendung einer Rührervorrichtung nach einem der Ansprüche 1 bis 7 zum Einmischen von Farbansätzen in Polyacryllösungen.

FIG. 1

FIG. 2
(A-B)

FIG. 3

FIG. 4

FIG. 5

FIG. 6

FIG. 7